# EUROPÄISCHE PATENTSCHRIFT

(11) **EP 2 726 371 B1**
(45) Veröffentlichungstag und Bekanntmachung des Hinweises auf die Patenterteilung: **15.11.2017**
(21) Anmeldenummer: 12740038.0
(22) Anmeldetag: 29.05.2012
(51) Int. Cl.: B64C 1/12, B32B 37/10

(54) **VERBINDUNGSANORDNUNG ZUR AERODYNAMISCHEN GLATTEN VERBINDUNG ZWEIER PROFILELEMENTE, VERFAHREN ZU DEREN FERTIGUNG UND VORRICHTUNG ZUR DURCHFÜHRUNG DES VERFAHRENS**
AERODYNAMIC SMOOTH JOINT BETWEEN TWO PROFILED ELEMENTS, METHOD AND FIXTURE FOR JOINING THE ELEMENTS.
JOINT AÉRODYNAMIQUEMENT LISSE ENTRE DEUX ÉLÉMENTS PROFILÉS, MÉTHODE ET DISPOSITIF POUR LA RÉALISATION DU JOINT.

(30) Priorität: 30.06.2011 DE 102011107624
(43) Veröffentlichungstag der Anmeldung: 07.05.2014
(73) Patentinhaber: Airbus Defence and Space GmbH, 85521 Ottobrunn (DE)
(72) Erfinder: HAVAR, Tamas, 83052 Bruckmühl (DE); GEISTBECK, Mathias, 87719 Mindelheim (DE); MEYER, Meinhard, 81799 München (DE); ROHR, Oliver, 85521 Ottobrunn (DE); MEER, Thomas, 85625 Glonn (DE)
(74) Vertreter: Isarpatent
(86) Internationale Anmeldenummer: PCT/DE2012/000553
(87) Internationale Veröffentlichungsnummer: WO 2013/000447

(56) Entgegenhaltungen:
- EP-A1- 2 368 699
- WO-A2-2009/118548
- DE-U1-202004 001 671
- US-A- 4 507 011

## Beschreibung

Die Erfindung betrifft ein Verfahren zur Ausbildung einer Verbindungsanordnung zur fugenlosen und aerodynamisch glatten Verbindung zweier Profilelemente zur Bildung einer laminar umströmbaren Profilfläche gemäß dem Oberbegriff von Anspruch 1 und eine Vorrichtung zur Durchführung des Verfahrens.

Heutige Fügeverfahren im Flugzeugbau bestehen meist aus Bolzenverbindungen mit Toleranzen von ca. 0,1mm. Das ist kein Problem denn die Herstelltoleranzen für Bauteile aus kohlefaserverstärktem Kunststoff und Metall liegen meist oberhalb dieses Wertes. Damit haben herkömmliche Anbindungskonzepte, beispielsweise von Nasen an Luftfahrzeug-Tragflügeln, Toleranzen über 0,3mm, welche für aerodynamische Profile mit turbulenter Strömung ausreichend sind.

Zunehmend besteht jedoch im Bereich der Luftfahrzeugentwicklung die Tendenz zur Reduzierung des Treibstoffverbrauches. Dazu wäre es wünschenswert, den Bereich der laminaren Anströmung von Profilflächen in Strömungsrichtung zu verlängern, was beispielsweise durch eine Grenzschichtabsaugung möglich ist. Für laminar umströmte Profilflächen sind diese Toleranzen um etwa eine Größenordnung zu hoch. Wenn beispielsweise eine Titannase mit einer eingebauten Pumpe zur Grenzschichtabsaugung an ein Tragflügelprofil aus kohle- oder glasfaserverstärktem Kunststoff befestigt wird, so muss der Übergang der Titannase zur Kunststoffbox extrem sanft gestaltet werden und Toleranzen von weniger als 0,05 mm aufweisen. Dies ist mit derzeitigen Herstell- und Montagemöglichkeiten nicht umsetzbar.

Die US 4 507 011 A offenbart ein gattungsgemäßes Verfahren zur Ausbildung einer Verbindungsanordnung zur Verbindung zweier Profilelemente.

Die DE 20 2004 001 671 U1 offenbart eine Kaschiervorrichtung mit mindestens zwei Anpressrollen sowie ein um die Anpressrollen laufendes Umlaufband, die automatisiert bewegbar ist, wobei diese mit einer zweiten Vorrichtung in einer gemeinsamen Halterung gehalten ist und gegeneinander drückbar sind und eine beiderseitige Bearbeitung von zwei auf gegenüberliegenden Seiten der zu beabeitenden Fläche erfolgt.

Aufgabe der Erfindung ist es, ein Verfahren zur Herstellung einer Verbindungsanordnung und eine Vorrichtung zur Durchführung des Verfahrens bereitzustellen, das die für eine laminare Umströmung erforderlichen geringen Toleranzen im Bereich von weniger als 0,05 mm einhält und automatisiert umsetzbar ist.

Diese Aufgabe wird durch die Merkmale der Ansprüche 1 und 8 gelöst. Vorteilhafte Weiterbildungen und Ausgestaltungen sind Gegenstand der abhängigen Ansprüche.

Insbesondere wird erfindungsgemäß Verfahren zur Ausbildung einer Verbindungsanordnung zur fugenlosen und aerodynamisch glatten Verbindung zweier Profilelemente zur Bildung einer laminar umströmbaren Profilfläche mit einer Außenseite und einer Innenseite vorgeschlagen, wobei ein erstes Profilelement eine sich zum zweiten Profilelement hin erstreckende erste Fixierleiste mit einer Anzahl erster Bohrungen mit Fixierbolzen aufweist, und die Oberfläche der ersten Fixierleiste gegenüber den Oberflächen der Profilelemente zur Außenseite hin tiefer liegt, ferner das zweite Profilelement eine innenseitig angeformte unterhalb der ersten Fixierleiste angeordnete zweite Fixierleiste mit zu den ersten Bohrungen fluchtenden zweiten Bohrungen zur Aufnahme der Fixierbolzen aufweist, wodurch die beiden Profilelemente miteinander starr verbunden sind, und ein unterhalb der Verbindungsfläche zwischen den Profilflächen und oberhalb der Fixierleistenoberfläche befindlicher Füllbereich mit mindestens zwei Lagen ausgehärteten Füllmaterials gefüllt ist, wobei in einem ersten Füllschritt der Füllbereich mit einer ersten Füllmateriallage teilweise ausgefüllt wird und mit einem in Verbindungslängsrichtung bewegten Abzugsrakel die Oberfläche des Füllmaterials geglättet und die erste Füllmateriallage anschließend ausgehärtet wird, und in einem zweiten Füllschritt eine zweite Füllmateriallage zum vollständigen Ausfüllen des Füllbereich aufgebracht wird und die Oberfläche der zweiten Füllmateriallage formgebend geglättet wird und diese anschließend ausgehärtet wird. Es sei dabei angemerkt, dass die Aufbringung des Füllmaterials auch in mehr als zwei Schritten erfolgen kann, was allerdings die Wirtschaftlichkeit reduziert.

Hierdurch wird der Einsatz heutiger Herstell- und Fertigungsverfahren zur Montage und Glättung von Stoßstellen miteinander verbundener Bauteile zur Bildung laminar umströmter aerodynamischer Profile möglich. Dabei ist ein hoher Automatisierungsgrad möglich, was kostengünstige aerodynamisch anspruchsvolle Fügungen realisieren lässt.

Als Füllmaterial wird vorzugsweise eines mit einem Schrumpf von weniger als 5% verwendet, um ein übermäßiges Einfallen des Füllmaterials zu vermeiden. Ferner sollte das Füllmaterial eine ausreichend hohe Haftfestigkeit aufweisen, insbesondere auf Metall (Titan) von mehr als 20 MPa. Vorzugsweise sollte das Füllmaterial eine Qualität Gt0 bis Gt2 nach dem sog. Gitterschnitttest der ausgehärteten Füllmassenoberfläche nach der Nassauslagerung als auch nach 1000-fachen Temperaturzyklen zwischen -55°C und 120°C aufweisen. Geeignete Füllmaterialien sind beispielsweise Seevenax der Fa. Mankiewicz,

Loctite 3336, DP490 oder DP190 der Fa. 3M.

Gemäß einer vorteilhaften Weiterbildung der Erfindung besteht eines der Profilelemente aus Kunststoff, und das andere aus Metall. Als Kunststoff eines der Profilelemente wird vorzugsweise kohle- oder glasfaserverstärkter Kunststoff Verwendung finden. Es ist natürlich im Rahmen der Erfindung genauso möglich, beide Profilelemente aus Kunststoff oder Metall zu fertigen.

Gemäß noch einer vorteilhaften Weiterbildung der Erfindung weist die Verbindungsfläche zwischen den Profilflächen eine Stufe mit der Höhe der Dicke einer auf dem Kunststoffprofilelement aufgebrachten Lackschicht auf, vorzugsweise etwa 0,04 - 0,08 mm. Somit kann auch bei einer Lackierung des Kunststoffbereiches ein hinreichend glatter Oberflächenübergang zu einem unbeschichteten Metallteil erreicht werden.

Gemäß noch einer vorteilhaften Weiterbildung der Erfindung weist der Übergang vom ersten und/oder zweiten Profilelement zur zugehörigen Fixierleiste einen Hinterschneidungsbereich auf. Dies ermöglicht vorteilhafterweise eine unlösbare Fixierung des ausgehärteten Füllmaterials im Füllbereich, insbesondere wenn an beiden Seiten des Füllbereichs Hinterschneidungen vorgesehen sind.

Gemäß noch einer vorteilhaften Weiterbildung der Erfindung werden vor dem ersten Füllschritt die Oberflächen mittels Lasercleaning vorbehandelt. Dieses Verfahren ermöglicht eine lokale Reinigung und Aufrauhung der Oberfläche und erzeugt keinen Schmutz wie beim Schleifen oder Chemikalien wie beim Beizen. Daher eignet es sich besonders zur automatisierten Durchführung in Montagehallen.

Gemäß noch einer vorteilhaften Weiterbildung der Erfindung wird die erste Füllmateriallage vor Aufbringung der zweiten Füllmateriallage mittels Lasercleaning vorbehandelt. Es ergeben sich die gleichen im Vorabsatz beschriebenen Vorteile und wenn beide Schritte nach dem gleichen Verfahren durchgeführt werden, verfahrenstechnische Vereinfachungen.

Gemäß noch einer vorteilhaften Weiterbildung der Erfindung erfolgt die formgebende Glättung der zweiten Füllmateriallage mittels eines in Verbindungslängsrichtung (also quer zur Luftströmungsrichtung) bewegten Abzugsrakels. Unter "Verbindungslängsrichtung" wird in diesem Zusammenhang die Richtung verstanden, entlang der eine Verbindung der beiden Profilelemente erfolgt, d.h. senkrecht zur Luftströmungsrichtung bei der späteren Umströmung.

Gemäß noch einer vorteilhaften Weiterbildung der Erfindung erfolgt die formgebende Glättung der zweiten Füllmateriallage über eine provisorisch auf die zweite Füllmateriallage aufgebrachte Trennfolie und mindestens eine in Verbindungslängsrichtung auf der Trennfolie abrollende Andrückrolle. Dieser Verfahrensschritt ermöglicht eine hochgenaue und automatisierbare Durchführung. Nach Beendigung des Vorgangs, also nach dem Aushärten der zweiten Füllmateriallage wird die Trennfolie abgezogen. Eine Vorrichtung zur Durchführung des oben beschriebenen Verfahrens wird beispielsweise vorgeschlagen, die mindestens zwei hyperboloidische Anpressrollen sowie ein um die Anpressrollen laufendes Umlaufband umfasst und in Verbindungslängsrichtung automatisiert bewegbar ist. Eine solche Vorrichtung kann automatisch, insbesondere mittels eines Roboters oder entsprechender Führungen bewegt werden und ermöglicht daher einen sehr wirtschaftlichen Automatisierungsgrad der Fertigung. Dabei sind zusätzlich zu den mindestens zwei hyperboloidischen Anpressrollen zwei nicht mit der Verbindungsanordnung kontaktierbare fassförmige Ausgleichsrollen vorgesehen, die komplementär zur Form der Anpressrollen so geformt sind, dass das Umlaufband über der Breite gleichmäßig gespannt ist. Dabei ist diese Vorrichtung mit einer zweiten gleichartigen Vorrichtung in einer gemeinsamen Halterung gehalten, die beide in einer gemeinsamen Halterung gegeneinander drückbar sind und eine beiderseitige Bearbeitung von zwei auf gegenüberliegenden Seiten der Profilfläche befindlichen Verbindungsanordnungen ermöglicht. Damit lässt sich der Fertigungsvorgang vereinfachen, wobei durch die gleichzeitige Aufbringung der Druckkräfte von beiden Seiten auf das Profil der Aufwand zur Fixierung desselben geringer ist.

Gemäß noch einer vorteilhaften Weiterbildung dieser Vorrichtung wird zwischen den zwei Anpressrollen mindestens ein gegen das Umlaufband und damit auch gegen die Oberfläche des Füllmaterials vorgespannter Heizblock zur Aushärtung der zweiten Füllmateriallage verwendet. Eine solche Vorrichtung ist baulich einfach und ermöglicht bei der Oberflächenglättung gleichzeitig eine Aushärtung mittels Hitze. Oder es werden zwei solche Vorrichtungen, eine erste ohne Heizblock zur Formgebung und eine zweite mit Heizblock vor allem zur Aushärtung hintereinander entlang der Verbindungsanordnung bewegt.

Gemäß noch einer vorteilhaften Weiterbildung dieser Vorrichtung sind eine Anzahl hintereinander angeordnete Heizblöcke vorgesehen, die vorzugsweise individuell vorgespannt sind. Damit lässt sich der Aushärte- und Glättevorgang noch präziser steuern.

Gemäß noch einer vorteilhaften Weiterbildung dieser Vorrichtung umfasst diese mindestens eine Einfüllvorrichtung zur Einbringung von Füllmaterial in den Füllbereich. Auf diese Weise lässt sich der Einfüllvorgang des Füllmaterials der zweiten Füllmateriallage vereinfachen.

Weitere Vorteile, Merkmale und Einzelheiten ergeben sich aus der nachfolgenden Beschreibung, in der - unter Bezug auf die Zeichnung - zumindest ein Ausführungsbeispiel im Einzelnen beschrieben ist. Beschriebene und/oder bildlich dargestellte Merkmale bilden für sich oder in beliebiger, sinnvoller Kombination den Gegenstand der Erfindung, gegebenenfalls auch unabhängig von den Ansprüchen, und können insbesondere zusätzlich auch Gegenstand einer separaten oder mehrerer separater Anmeldung/en sein. Gleiche, ähnliche und/oder funktionsgleiche Teile sind mit gleichen Bezugszeichen versehen.

Es zeigen:
- Figur 1:: eine perspektivische Darstellung der Anwendbarkeit der erfindungsgemäßen Verbindungsanordnung;
- Figur 2:: eine Darstellung eines Flugzeug-Seitenleitwerks mit Nasenbereich;
- Figur 3:: eine perspektivische Darstellung einer Verbindungsanordnung ohne Füllmaterial;
- Figur 4:: eine perspektivische Darstellung einer Verbindungsanordnung mit Füllmaterial;
- Figur 5:: eine schematische Schnittdarstellung durch einen Verfüllungsschritt mit Füllmasse;
- Figur 6:: eine erste Ausführung einer Vorrichtung zur Durchführung des Verfahrens zur Fertigung der Verbindungsanordnung;
- Figur 7:: eine zweite Ausführung einer Vorrichtung zur Durchführung des Verfahrens zur Fertigung der Verbindungsanordnung;
- Figur 8:: eine schematische Darstellung einer Anordnung zur beiderseitigen Bearbeitung einer Profilfläche.

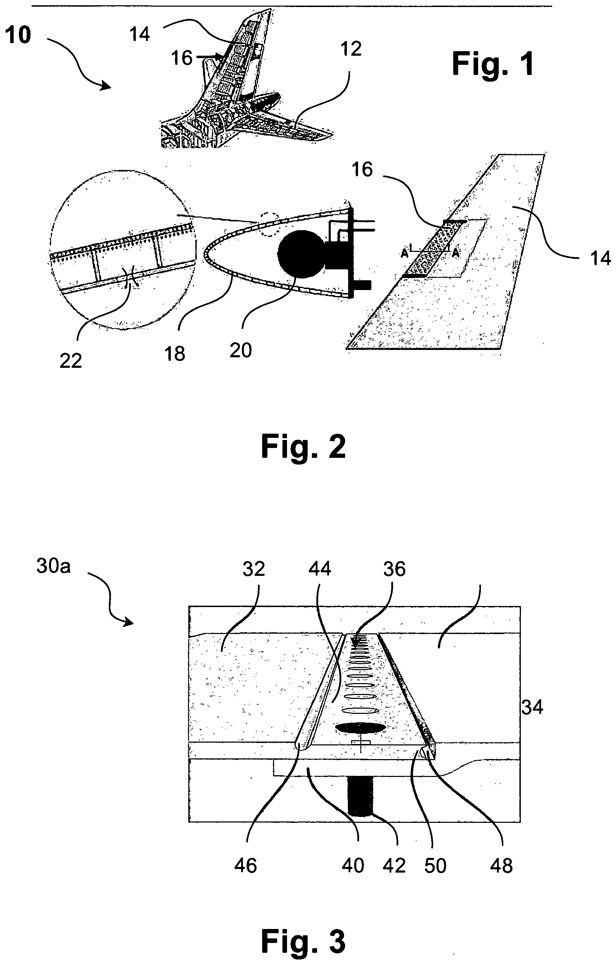

In Figur 1 ist schematisch der Heckbereich 10 eines Luftfahrzeugs dargestellt mit Höhenleitwerk 12 und einem Seitenleitwerk 14. Mit 16 ist der Vorderkantenbereich des Seitenruders 14 bezeichnet, in dem zunächst eine laminare Strömung vorliegt, die jedoch nach relativ kurzer Strecke turbulent wird. Um den Bereich der laminaren Strömung zu verlängern- wie in Figur 2 dargestellt ist - wird im vorderen Teil des Seitenleitwerks 14 eine Haube oder Nase 18 befestigt, in deren Inneren mindestens eine Saugpumpe 20 angeordnet ist, mittels der über in der Außenhaut der Nase 18 angeordneter Sauglöcher 22 Luft aus der turbulenten Grenzschicht abgesaugt und damit der Bereich der laminaren Strömung verlängert wird, wodurch der Reibungswiderstand sinkt und damit weniger Treibstoff verbraucht wird. Um diesen Effekt optimal nützen zu können ist es wichtig, dass der Übergang von der Nase 18 zur normalen Struktur des Seitenleitwerks 14 mit sehr geringen Toleranzen, also möglichst glatt ausgebildet wird, sonst bildet sich an dieser Stelle eine Verwirbelung und damit ein Übergang in turbulente Strömung. Die erfindungsgemäße Verbindungsanordnung kann jedoch in gleicher Weise auch bei dem Höhenleitwerk 12 oder nicht dargestellten Tragflügeln zur Anwendung kommen.

In Figur 3 ist eine perspektivische Darstellung einer Verbindungsanordnung 30a dargestellt, bei der eine erste Profilfläche 32 mit einer zweiten Profilfläche 34 miteinander verbunden werden soll. Vorzugsweise ist die erste Profilfläche 32 aus Titan und die zweite Profilfläche 34 aus CFK gefertigt. Die erste Profilfläche 32 weist eine angeformte und sich in Richtung der zweiten Profilfläche 34 erstreckende erste Fixierleiste 36 auf, die eine Anzahl an Bohrungen 38 aufweist. An der zweiten Profilfläche 34 ist in analoger Weise eine zweite Fixierleiste 40 angeformt, die ebenfalls - nicht dargestellte - Bohrungen aufweist, die mit den Bohrungen 38 der ersten Fixierleiste 36 fluchten für die Montage von Bolzen 42a (Nieten oder Schrauben) zur Befestigung der beiden Profilflächen 32, 34 aneinander. Damit kann beispielsweise die in Figur 1 und 2 gezeigte Nase 18 des Seitenleitwerks 14 gebildet werden.

Die Oberfläche 44 der oberen Fixierleiste 36 liegt gegenüber den Oberflächen der beiden Profilflächen 32, 34 um eine gewisse Strecke, vorzugsweise 0,2 bis 0,5 mm tiefer, wodurch oberhalb der Fixierleistenoberfläche 44 bis zur Verbindungsfläche der beiden Profilflächen 32, 34 ein Füllbereich 45 definiert ist, der mit Füllmaterial befüllt ist. Ferner ist im Übergang von der ersten Profilfläche 32 zur zugehörigen Fixierleiste 36 eine Nut 46 angeordnet, die dazu dient, eine verbesserte Anbindung des Füllmaterials an die Struktur zu unterstützen. Die erste Fixierleiste 36 hat eine solche Erstreckung, die einen Spalt 48 zur zweiten Profilleiste 34 bzw. zur zweiten Fixierleiste 40 belässt. Ferner weist die Stirnfläche der ersten Fixierleiste 36 eine Nut 50 auf, die eine Hinterschneidung darstellt, und ein Reservoir zur Aufnahme übermäßigen Füllmaterials sowie eine Fixierung des ausgehärteten Füllmaterials ermöglicht, die zusätzlich zur Haftung auf der Oberfläche 44 wirkt.

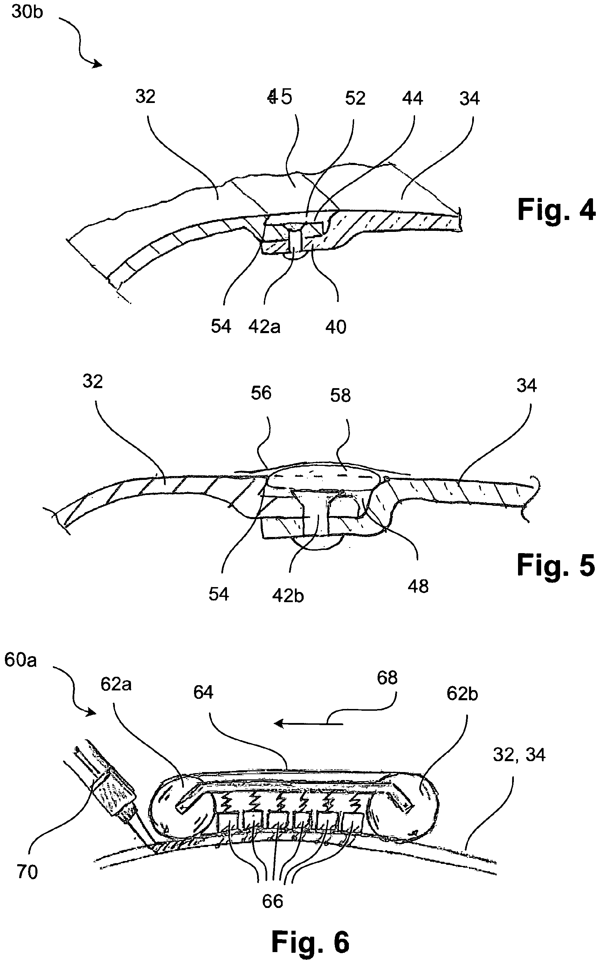

In Figur 4 ist eine perspektivische Darstellung einer fertigen Verbindungsanordnung 30b dargestellt, die mit Füllmaterial 52 ausgefüllt ist. Dabei ist die Dicke des Füllmaterials 52 über der Oberfläche 44 übertrieben dick dargestellt. Gleiche Teile wie in Figur 2 sind mit gleichen Bezugszeichen versehen. Bei dieser Anordnung ist eine Hinterschneidung 54 vorhanden, welche ebenfalls dazu beiträgt, das Füllmaterial 52 zu fixieren. Außen wird eine ebene und hochgradig glatte Verbindungsfläche 55 zwischen den Oberflächen der Profilleisten 32 und 34 gebildet.

In Figur 5 ist im schematischen Schnitt ein Verfahren zum Ausfüllen der ersten Füllmateriallage mittels einer Trennfolie 56 dargestellt. Gleiche Bezugszeichen bezeichnen gleiche Bauteile wie in den anderen Figuren. Dabei werden bei dieser Ausführungsform Senkkopfbolzen 42b verwendet, deren Bolzenköpfe über die Oberfläche 44 hinausragen und damit pilzkopfartige Vorsprünge bilden, die von Füllmaterial 58 umschlossen werden, was ebenfalls eine Fixierung für das ausgehärtete Füllmaterial bildet. Das Füllmaterial 58 wird in den Füllbereich gespritzt und ragt möglicherweise zunächst über die spätere Kontur hinaus, bildet also einen Wulst, während gleichzeitig noch nicht alle Hohlräume ausgefüllt sind, insbesondere nicht die Nut 48. Anschließend wird eine Trennfolie 56 über dem Füllmaterial 58 platziert und danach mit einem Abzugsrakel die Endkontur aufgeprägt, wobei das Füllmaterial 58 unter die Hinterschneidung 54, unter den Senkkopfbolzen 42b und in die Nut 48 gedrückt wird. Dabei bleibt die Oberfläche der so gebildeten ersten Füllmateriallage unterhalb der- vorzugsweise näherungsweise eindimensional gekrümmten - mit einer gestrichelten Linie angedeuteten - Verbindungsfläche 55 zwischen den Oberflächen der Profilflächen 32, 34. Anschließend erfolgt, vorzugsweise mittels Hitze, ein Aushärten des Füllmaterials 58. Anschließend kann in einem zweiten, weitgehend identischen Schritt die zweite Füllmateriallage auf die untere Lage aufgebracht werden, die dann die endgültige Außenkontur bildet.

In Figur 6 ist eine erste Ausführung einer Vorrichtung 60a zur Durchführung des vorbeschriebenen Verfahrens dargestellt, die im Wesentlichen aus zwei Anpressrollen 62a, 62b und einem Umlaufband 62 besteht, das um die beiden Anpressrollen 62a, 62b geführt ist. Im Bereich zwischen den Anpressrollen 62a, 62b befinden sich eine Anzahl Heizblöcke 66, die einzeln mittels Federn gegen das Umlaufband 64 bzw. die beim Fertigungsvorgang darunter angeordneten Profilflächen 32, 34 gedrückt werden. Im Betrieb bewegt sich die Vorrichtung 60a in der mit dem Pfeil 68 bezeichneten Richtung. Vor der Vorrichtung 60a wird mittels einer Einspritzvorrichtung 70, die auch an der Vorrichtung 60a angebracht sein kann, das Füllmaterial in den Füllbereich zwischen den Profilflächen 32, 34 gedrückt.

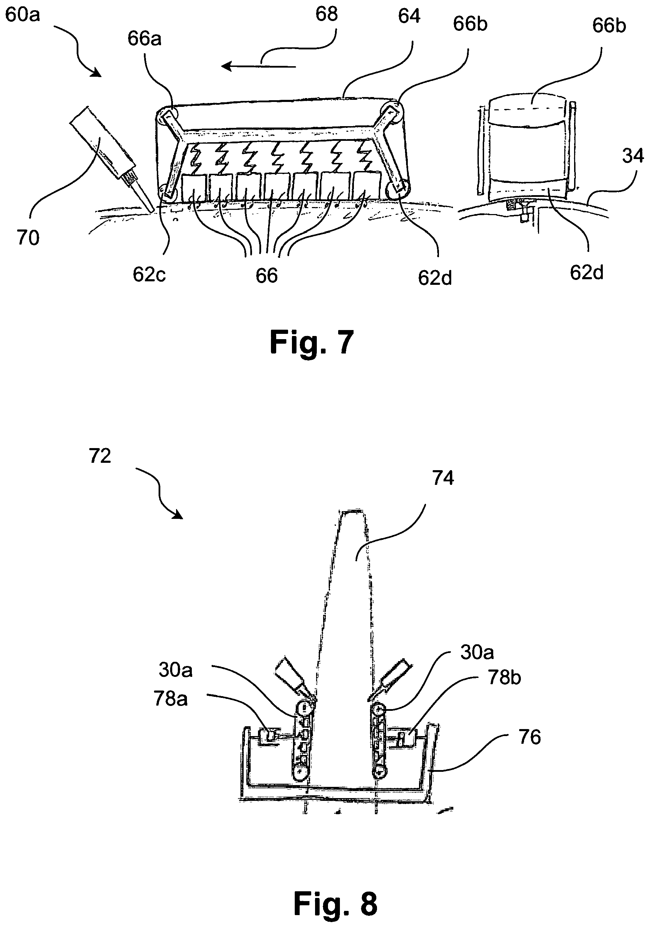

In Figur 7 ist eine zweite Ausführung einer Vorrichtung 60b zur Durchführung des vorbeschriebenen Verfahrens in zwei Ansichten dargestellt, bei der gleiche Bezugszeichen gleiche Teile wie in Figur 6 bezeichnen. Im Unterschied zur Ausführung gemäß Figur 6 weist die Vorrichtung 60b zwei Anpressrollen 62c, 62d auf, die keine zylindrische Form sondern vielmehr die Form eines Hyperboloiden aufweist, also im Mittelbereich dünner sind, so dass die typischerweise eindimensional gekrümmte Verbindungskontur zwischen den Profilflächen 32, 34 aufgeprägt werden kann. Damit das Umlaufband 64 gleichmäßig gespannt ist, weist die Vorrichtung 60b zwei Ausgleichsrollen 66a, 66b auf, die komplementär zu den Anpressrollen 62c, 62d geformt sind, also etwa fassförmig.

In Figur 8 ist eine Anordnung 72 zur gleichzeitigen Bearbeitung von zwei Verbindungsanordnungen dargestellt, die auf beiden Seiten eines Profils 74 angeordnet sind, um beispielsweise eine Nase 18 (Figur 2) gleichzeitig an beiden Verbindungsenden an dem Profil 74 zu befestigen. Die Anordnung 72 umfasst einen Rahmen 76, an dem zwei der in Figur 6 dargestellten Vorrichtungen 30a - es kann natürlich alternativ auch die in Figur 7 dargestellte alternative Vorrichtung 60b verwendet werden - über Hubeinrichtungen 78a, 78b angebracht sind. Mittels der Hubeinrichtungen 78a, 78b werden die beiden Vorrichtungen 30a jeweils gegen das Profils 74 im Bereich der beiden Verbindungsanordnungen gedrückt, wobei sich die ausgeübten Kräfte gegenseitig aufheben und nur ein geringer Aufwand zur Fixierung des Profils 74 erforderlich ist. Durch die gleichzeitige Bearbeitung auf beiden Seiten reduziert sich die Fertigungszeit auf ca. die Hälfte.

**Bezugszeichenliste**

| | | | |
|---|---|---|---|
| 10 | Heckbereich eines Luftfahrzeugs | 52 | Füllmaterial |
| 12 | Höhenleitwerk | 54 | Hinterschneidung |
| 14 | Seitenleitwerk | 55 | Verbindungsfläche |
| 16 | Vorderkantenbereich | 56 | Trennfolie |
| 18 | Haube oder Nase | 58 | Füllmaterial |
| 20 | Saugpumpe | 60a,b | Vorrichtung |
| 22 | Sauglöcher | 62a-d | Anpressrollen |
| 30a,b | Verbindungsanordnung | 64 | Umlaufband |
| 32 | erste Profilfläche | 66a,b | Ausgleichsrollen |
| 34 | zweite Profilfläche | 70 | Einspritzvorrichtung |
| 36 | erste Fixierleiste | 72 | Anordnung |
| 38 | Bohrungen | 74 | Profils |
| 40 | zweite Fixierleiste | 76 | Rahmen |
| 42 | Bolzen | 78a,b | Hubeinrichtungen |
| 44 | Oberfläche von 36 | | |
| 45 | Füllbereich | | |
| 46 | Nut | | |
| 48 | Spalt | | |
| 50 | Nut | | |

## Patentansprüche

1. Verfahren zur Ausbildung einer Verbindungsanordnung zur fugenlosen und aerodynamisch glatten Verbindung zweier Profilelemente (32, 34) zur Bildung einer laminar umströmbaren Profilfläche mit einer Außenseite und einer Innenseite, wobei ein erstes Profilelement (32) mit einer sich zum zweiten Profilelement (34) hin erstreckenden ersten Fixierleiste (36) sowie mit einer Anzahl erster Bohrungen (38) mit Fixierbolzen (42) verwendet wird, und die Oberfläche (44) der ersten Fixierleiste (36) gegenüber den Oberflächen der Profilelemente (32, 34) zur Außenseite hin tiefer liegt, ferner das zweite Profilelement (34) mit einer innenseitig angeformten unterhalb der ersten Fixierleiste(36) angeordneten zweiten Fixierleiste (40) mit zu den ersten Bohrungen fluchtenden zweiten Bohrungen zur Aufnahme der Fixierbolzen (42) aufweist, wodurch die beiden Profilelemente (32, 34) miteinander starr verbunden werden, und ein oberhalb der Fixierleistenoberfläche (44) befindlicher Füllbereich (45) mit Füllmaterial (52) gefüllt wird, **dadurch gekennzeichnet, dass** in einem ersten Füllschritt der Füllbereich (45) mit einer ersten Füllmateriallage teilweise ausgefüllt wird und mit einem in Verbindungslängsrichtung bewegten Abzugsrakel die Oberfläche des Füllmaterials (58) geglättet und die erste Füllmateriallage anschließend ausgehärtet wird, und in einem zweiten Füllschritt eine zweite Füllmateriallage zum vollständigen Ausfüllen des Füllbereichs (45) aufgebracht wird und die Oberfläche der zweiten Füllmateriallage formgebend geglättet wird und diese anschließend ausgehärtet wird.

2. Verfahren nach Anspruch 1, **dadurch gekennzeichnet, dass** vor dem ersten Füllschritt die mit Füllmaterial in Verbindung kommenden Oberflächen mittels Lasercleaning vorbehandelt werden.

3. Verfahren nach Anspruch 1, **dadurch gekennzeichnet, dass** die erste Füllmateriallage vor Aufbringung der zweiten Füllmateriallage mittels Lasercleaning vorbehandelt wird.

4. Verfahren nach Anspruch 1, **dadurch gekennzeichnet, dass** die formgebende Glättung der zweiten Füllmateriallage mittels eines in Verbindungslängsrichtung bewegten Abzugsrakels erfolgt.

5. Verfahren nach Anspruch 1, **dadurch gekennzeichnet, dass** die formgebende Glättung der zweiten Füllmateriallage über eine provisorisch auf die zweite Füllmateriallage aufgebrachte Trennfolie (56) und mindestens eine in Verbindungslängsrichtung auf der Trennfolie abrollende Anpressrolle (62) erfolgt.

6. Verfahren nach Anspruch 1, **dadurch gekennzeichnet, dass** ein Profilelement (32, 34) aus Kunststoff, vorzugsweise einem Kohlefaserverbundwerkstoff verwendet wird, und ein anderes Profilelement (34, 32) aus Metall, vorzugsweise einer Titanlegierung verwendet wird.

7. Verfahren nach Anspruch 1, **dadurch gekennzeichnet, dass** eine Verbindungsfläche zwischen den Profilflächen (32, 34) verwendet wird, die eine Stufe mit der Höhe der Dicke einer auf dem Kunststoffprofilelement aufgebrachten Lackschicht aufweist.

8. Verbindungsanordnung hergestellt nach dem Verfahren nach Anspruch 1, **dadurch gekennzeichnet, dass** der Übergang vom ersten und/oder zweiten Profilelement (32, 34) zur zugehörigen Fixierleiste (36, 40) einen Hinterschneidungsbereich (54) aufweist.

## Claims

1. Method for forming a connecting arrangement that connects two profiled elements (32, 34) in a seamless and aerodynamically smooth manner for forming a profiled surface around which laminar flow is possible, said profiled surface having an outer face and an inner face, wherein a first profiled element (32) is used having a first fixing strip (36) that extends to the second profiled element (34) and also having a number of first holes (38) having fixing bolts (42), and the upper surface (44) of the first fixing strip (36) lies lower than the surfaces of the profiled elements (32, 34) with respect to the outer face, moreover the second profiled element (34) comprises a second fixing strip (40) that is molded on the inner face and arranged below the first fixing strip (36), said second fixing strip having second holes that are flush with respect to the first holes for receiving the fixing bolts (42), as a result of which the two profiled elements (32, 34) are rigidly connected to one another, and a filling region (45) that is located above the fixing strip surface (44) is filled with filling material (52), **characterised in that** in a first filling step the filling region (45) is in part filled with a first filling material layer and the surface of the filling material (58) is smoothed using a removal scraper that is moved in a longitudinal direction of the connection and the first filling material layer is subsequently cured, and in a second filling step a second filling material layer is applied so as to entirely fill the filling region (45) and the surface of the second filling material layer is smoothed in a shaping manner and said layer is subsequently cured.

2. Method according to claim 1, **characterised in that** prior to the first filling step the surfaces that come into contact with the filling material are pretreated by means of laser cleaning.

3. Method according to claim 1, **characterised in that** prior to applying the second filling material layer the first filling material layer is pretreated by means of laser cleaning.

4. Method according to claim 1, **characterised in that** the second filling material layer is smoothed in a shaping manner by means of a removal scraper that is moved in a longitudinal direction of the connection.

5. Method according to claim 1, **characterised in that** the second filling material layer is smoothed in a shaping manner by way of a separating film (56) that is applied temporarily to the second filling material layer and at least one pressure roller (62) rolling on the separating film in the longitudinal direction of the connection.

6. Method according to claim 1, **characterised in that** a profiled element (32, 34) that is embodied from synthetic material, preferably from a carbon fibre composite material, is used and another profiled element (34, 32) that is embodied from metal, preferably from a titanium alloy, is used.

7. Method according to claim 1, **characterised in that** a connecting surface between the profiled surfaces (32, 34) is used, said connecting surface comprising a step having the height of the thickness of a coating layer that is applied to the synthetic material profiled element.

8. Connecting arrangement produced according to the method according to claim 1, **characterised in that** the transition from the first and/or second profiled element (32, 34) to the associated fixing strip (36, 40) comprises an undercut region (54).

## Revendications

1. Méthode pour la réalisation d'un système d'assemblage pour l'assemblage sans joint aérodynamiquement lisse de deux éléments profilés (32, 34) afin de former une surface profilée pouvant être contournée de manière laminaire comportant un côté extérieur et un côté intérieur, un premier élément profilé (32) comprenant une première patte de fixation (36) s'étendant vers le second élément profilé (34) ainsi qu'un certain nombre de premiers alésages (38) dotés de boulons de fixation (42) étant utilisé, et la surface (44) de la première patte de fixation (36) étant plus basse en direction du côté extérieur par rapport aux surfaces des éléments profilés (32, 34), le second élément profilé (34) comportant en outre une seconde patte de fixation (40) formée côté intérieur et disposée sous la première patte de fixation (36) avec des seconds alésages destinés à recevoir les boulons de fixation (42) et s'alignant sur les premiers alésages, moyennant quoi les deux éléments profilés (32, 34) sont reliés l'un à l'autre de manière rigide, et une zone de remplissage (45) située au-dessus de la surface de patte de fixation (44) est remplie avec une matière de remplissage (52), **caractérisée en ce que**, dans une première étape de remplissage, la zone de remplissage (45) est remplie partiellement avec une première couche de matière de remplissage et la surface de la matière de remplissage (58) est lissée au moyen d'une racle de lissage déplacée dans la direction longitudinale de l'assemblage et la première couche de matière de remplissage est ensuite durcie, et dans une seconde étape de remplissage, une seconde couche de matière de remplissage est appliquée pour remplir entièrement la zone de remplissage (45) et la surface de la seconde couche de matière de remplissage est lissée de manière à lui conférer une forme et celle-ci est ensuite durcie.

2. Méthode selon la revendication 1, **caractérisée en ce que**, avant la première étape de remplissage, les surfaces venant en liaison avec la matière de remplissage sont prétraitées par nettoyage au laser.

3. Méthode selon la revendication 1, **caractérisée en ce que** la première couche de matière de remplissage est prétraitée par nettoyage au laser avant l'application de la seconde couche de matière de remplissage.

4. Méthode selon la revendication 1, **caractérisée en ce que** le lissage de manière à lui conférer une forme de la seconde couche de matière de remplissage est effectué au moyen d'une racle de lissage déplacée dans la direction longitudinale de l'assemblage.

5. Méthode selon la revendication 1, **caractérisée en ce que** le lissage de manière à lui conférer une forme de la seconde couche de matière de remplissage est effectué par le biais d'un film de séparation (56) appliqué provisoirement sur la seconde couche de matière de remplissage et d'un rouleau de pression (62) roulant sur le film de séparation dans la direction longitudinale de l'assemblage.

6. Méthode selon la revendication 1, **caractérisée en ce qu'**un élément profilé (32, 34) en matière plastique, de préférence en matériau composite renforcé de fibres de carbone, est utilisé, et un autre élément profilé (34, 32) en métal, de préférence un alliage de titane, est utilisé.

7. Méthode selon la revendication 1, **caractérisée en ce qu'**une surface d'assemblage entre les surfaces profilées (32, 34), qui présente une marche de la hauteur de l'épaisseur d'une couche de peinture appliquée sur l'élément profilé en matière plastique, est utilisée.

8. Système d'assemblage fabriqué selon la méthode selon la revendication 1, **caractérisé en ce que** la transition du premier et/ou second élément profilé (32, 34) à la patte de fixation (36, 40) associée comporte une zone de contre-dépouille (54).
